# FASCICULE DE BREVET EUROPEEN

(11) **EP 1 615 580 B1**
(45) Date de publication et mention de la délivrance du brevet: **03.10.2007**
(21) Numéro de dépôt: 04728312.2
(22) Date de dépôt: 20.04.2004
(51) Int. Cl.: A61C 5/02

(54) **INSTRUMENT POUR L´ALESAGE DE CANAUX RADICULAIRES**
INSTRUMENT ZUR BEARBEITUNG VON ZAHNWURZELKANÄLEN
INSTRUMENT FOR DRILLING RADICULAR CHANNELS

(30) Priorité: 24.04.2003 FR 0305019
(43) Date de publication de la demande: 18.01.2006
(73) Titulaire: Rouiller, Jean-Claude, 2300 La Chaux-de-Fonds (CH)
(72) Inventeur: BREGUET, Olivier, CH-2400 Le Locle (CH)
(74) Mandataire: Nithardt, Roland
(86) Numéro de dépôt international: PCT/CH2004/000239
(87) Numéro de publication internationale: WO 2004/093712

(56) Documents cités:
- CH-A- 513 640
- GB-A- 916 197
- US-A- 4 538 989

## Description

### Domaine technique

La présente invention concerne un instrument pour l'alésage de canaux radiculaires, notamment un instrument d'alésage flexible destiné à être entraîné mécaniquement par un moteur électrique, cet instrument comportant un tronçon d'extrémité agencé pour être monté dans un mandrin entraîné par ledit moteur électrique, une zone proximale adjacente audit tronçon d'extrémité, une zone centrale prolongeant la zone proximale et une zone distale prolongeant la zone centrale et agencée pour assurer le guidage de l'instrument dans un canal radiculaire.

### Technique antérieure

Le nettoyage et la mise en forme des canaux radiculaires pour recevoir les substances d'obturation s'effectuent par utilisation d'instruments d'alésage ayant une partie active conique et comportant une ou plusieurs arêtes de coupe enroulées en hélice le long de cette partie active. Ce type d'instruments dentaires est par exemple illustré par les brevets US 4,260,379 et CH513640, et la publication internationale WO 00/59399. Etant donné que les canaux radiculaires sont rarement droits et présentent souvent des courbes importantes, les instruments d'alésage, également appelés limes endodontiques, doivent être flexibles. C'est pourquoi le matériau utilisé pour la fabrication des instruments est passé de l'acier inoxydable au nickel-titane.

Les limes endodontiques sont conçues pour une utilisation manuelle ou pour une utilisation mécanisée. Lorsqu'elles sont entraînées par un moteur électrique, le nickel-titane est obligatoire à cause de la fatigue cyclique qui apparaît en cours d'utilisation dans les canaux courbes. Dans la technique de rotation continue, la lime tourne en vitesse lente (par exemple entre 100 et 2'000 tours/min) et avance dans l'ouverture du canal. La zone active de la lime coupe ou racle les parois du canal radiculaire. Cette zone de longueur réduite au début d'une intervention, s'étend de plus en plus lors de l'avancée de la lime dans le canal. Le couple d'entraînement qui doit être appliqué à la lime afin de surmonter les forces de friction croissantes et de faire tourner la lime à la vitesse désirée lors de son avance s'accroît de plus en plus. Plus la progression dans le canal augmente plus le risque de blocage ou de vissage de la lime augmente. Lorsque ce cas se produit, le couple appliqué sur la lime augmente brutalement et la lime risque de casser. La cassure de la lime dans le canal radiculaire est l'accident redouté du dentiste, car la pointe cassée est généralement irrécupérable.

Par ailleurs, les instruments actuellement disponibles sur le marché pour la mise en oeuvre de la nouvelle technique d'utilisation de limes à entraînement mécanique sont directement dérivés des instruments traditionnels de forme hélicoïdale, notamment ceux décrits dans les brevets CH 513 640 et US 4 538 989. C'est précisément en raison de cette forme en hélice que l'effet de vissage et de blocage apparaît et se termine inévitablement par une fracture instrumentale.

Afin d'éviter ce phénomène de vissage/blocage indésirable, les fabricants d'instruments endodontiques ont apporté quelques solutions.

L'une de ces solutions consiste à émousser de façon plus ou moins marquée les arêtes de coupe de l'instrument afin d'éviter qu'elles entaillent la matière et se forent un passage dans la substance qui se trouve dans le canal ou qui constitue les parois de ce dernier. Une autre solution consiste à prévoir un témoin concentrique important appelé méplat radiant. Ces technologies sont par exemple illustrées par le brevet américain US 6,074,209.

L'élimination au mieux partielle de la tendance au vissage est obtenue par une méthode de travail appelée la méthode « crown-down » qui consiste à réaliser l'alésage du canal avec des instruments de différentes conicités en commençant par les instruments les plus coniques. De cette manière, l'effort de friction qui induit des contraintes importantes est limité à une zone de faible longueur de la partie active de l'instrument et empêche le « gainage » de ce dernier.

Ces approches se sont souvent montrées inefficaces pour éviter l'effet de vissage et en plus, elles réduisent l'efficacité de la fonction coupe de l'instrument, ce qui a pour conséquence d'augmenter le couple de travail et un risque de rupture accru.

En tenant compte des inconvénients ci-dessus et des risques induits par ces nouvelles méthodes de travail, on constate que le gain de temps réalisé par rapport aux méthodes traditionnelles est quasiment nul. En outre, le travail du praticien reste délicat et demande une dextérité certaine pour éviter les risques de vissage/blocage et les conséquences que cet accident peut avoir pour le patient.

Toutefois, certains perfectionnements apportés aux instruments démontrent que la méthode d'alésage rotatif à entraînement mécanique peut générer un gain de temps, un confort de travail accru tout en améliorant la qualité du travail réalisé notamment en respectant la trajectoire naturelle du canal. Les améliorations doivent permettre de surveiller la fatigue cyclique des instruments, maîtriser les forces de friction et empêcher le vissage conduisant au blocage de l'instrument et pouvant entraîner la rupture.

Afin de prévenir la fatigue du métal avec lequel sont réalisés les instruments, appelée fatigue cyclique, la méthode la plus fiable serait sans doute de n'utiliser les instruments qu'une seule fois. Toutefois, cette mesure ne serait pas très économique, et certainement pas justifiée d'un point de vue technique, puisque la fatigue cyclique est différente selon la courbe du canal où a lieu l'intervention. De plus, chaque instrument subit une fatigue différente selon sa dimension, sa conicité, le couple de travail, et sa vitesse de rotation.

La publication WO 01/10329 décrit un moyen de marquage associé à l'instrument permettant de cumuler les indices de fatigues successifs suite à diverses utilisations de cet instrument. Ce moyen simple est très efficace et constitue un outil fiable d'évaluation de la fatigue cyclique au cours de la vie d'un instrument du type lime endodontique. Il offre une maîtrise de la fatigue du métal en permettant à la fois d'enregistrer le « vécu » de l'instrument et de conserver cette information jusqu'à sa mise au rebut définitif.

Le couple qui doit être appliqué sur la lime est de plus en plus élevé au cours de sa progression dans le canal. Pour limiter le risque du vissage, la publication internationale WO 02/065938 décrit un instrument d'alésage présentant une forme d'hélice particulière. Chaque lime comporte trois ou quatre arêtes de coupes coupantes tout au long de la partie active. Chaque arête décrit une trajectoire ondulée et hélicoïdale disposée à l'intérieur d'une enveloppe conique. De cette manière, aucune arête de coupe n'est continuellement en contact avec l'enveloppe conique, mais seulement en certains points spécifiques, ce qui évite une progression importante du couple d'entraînement de l'instrument en fonction de la profondeur de pénétration dans le canal radiculaire. De ce fait, les forces de friction sont considérablement diminuées et l'effet de vissage peut être évité en choisissant minutieusement les différents pas et les angles d'hélice des instruments tout au long de la partie active de cet instrument. Un autre moyen pour éviter le vissage est l'utilisation d'un instrument comportant une hélice à pas alterné telle que décrite dans la publication européenne EP 0 890 403 A1.

On constate néanmoins que dans la pratique un certain nombre d'instruments cassent au cours de leur utilisation. L'analyse des causes de rupture mène à la conclusion qu'une grande partie des cassures instrumentales est due à un non-respect des règles d'utilisation, c'est-à-dire au réglage des paramètres, et des modes d'utilisation qui sont les suivants :
- Vitesse de travail (T/min de l'instrument)
- Pression apicale
- Mouvement de va-et-vient
- Durée du travail
- Fatigue du métal
- Progression

La vitesse de rotation de l'instrument lors du travail (100 à 2'000 tours/min) est facilement maîtrisable en utilisant les nouveaux ensembles moteur/contre-angle proposés par de nombreux fabricants.

La pression apicale à appliquer peut varier énormément d'un type d'instrument à l'autre et aussi d'une référence d'instrument à l'autre dans une même gamme. Pour certains instruments qui ont une très forte tendance au vissage la pression est en fait une force de retenue. Pour certains instruments connus, la pression que le praticien doit exercer pour progresser de manière sûre, est comparable à la pression exercée pour écrire avec un crayon à papier. Le mouvement de va-et vient permet l'évacuation des débris et évite que la fatigue de l'instrument due aux contraintes auxquelles il est soumis soit localisée au même endroit sur cet instrument. La règle à appliquer est de ne jamais rester en position stationnaire dans le canal. L'efficacité des instruments évoqués ci-dessus permet d'écourter le temps de travail et ainsi de diminuer la fatigue du métal.

La progression de l'instrument de l'entrée vers l'extrémité du canal doit se faire de telle manière que l'instrument enlève une quantité de matière raisonnable à chaque révolution et que les débris soient bien évacués. Plus la vitesse de progression est rapide pour une vitesse de rotation donnée, et plus la quantité de matière enlevée par tour est importante. Il est évident qu'il y a une limite à la vitesse de progression pour une vitesse de rotation donnée. Cette limite est souvent difficile à évaluer pour le praticien car il a dans les mains un instrument du type contre-angle motorisé surpuissant par rapport à la résistance des limes endodontiques. Avec cet équipement il n'a plus la sensibilité tant appréciée qu'il avait avec les instruments manuels.

Par le moyen d'une formation adéquate des praticiens il est possible de bien maîtriser certains des paramètres spécifiés précédemment. Par contre, pour la pression apicale et la vitesse de progression il est plus difficile de donner des règles précises d'utilisation. Au cours de démonstrations les essais se font dans des blocs en matières plastiques et on constate que certaines personnes ont un certain sens mécanique et une certaine sensibilité qui leur évite de dépasser les limites de résistance de la matière. D'autres personnes par contre ne présentent pas ces qualités et ne perçoivent pas la résistance des matériaux et surestiment le travail que la lime peut effectuer en un temps donné. Le fait de disposer d'un outil d'entraînement, un contre-angle surpuissant qui permettrait de percer des trous dans le métal, ne facilite pas cette prise de conscience.

Pour essayer de trouver une solution à ces inconvénients, les fabricants de dispositifs d'entraînement motorisés ont développé un nouveau type de moteur avec contrôle de couple. Ce contrôle permet de stopper la rotation de la lime lorsque le couple de travail devient trop important.

L'idée paraît bonne a priori mais, dans la pratique, la sécurité accrue que l'on croyait atteindre en utilisant des moteurs avec contrôle de couple se révèle trompeuse et même dangereuse.

En effet, tous les instruments endodontiques utilisés pour le nettoyage des canaux radiculaires sont coniques. La conicité est sensiblement comprise entre 2% et 12%. Il faut aussi préciser que selon les statistiques, la plupart des cassures d'instruments se produisent au niveau du premier tiers de la longueur de la lime en partant de la pointe. Dans les faits, on constate que les systèmes d'entraînement à contrôle de couple ne sont qu'une solution partielle. En effet, pour que la sécurité soit maximale, le couple maximum délivré par le système d'entraînement, dit contre-angle, devrait correspondre au couple de rupture à la pointe de l'instrument. Si on programme le contre-angle sur la base de la valeur de ce couple qui est très faible, on s'aperçoit que le praticien ne peut plus travailler parce que le moteur se bloque dès que l'instrument est engagé à une certaine profondeur dans le canal. Ce blocage survient plus ou moins rapidement en fonction de la conicité de l'instrument et du pouvoir de coupe de l'instrument. Pour que le travail reste possible, le couple de travail doit être augmenté de manière importante, notamment pour les instruments ayant un faible pouvoir de coupe. De ce fait, dans la pratique, en raison de ce réglage de la limite du couple de torsion, les instruments ne sont pas, dans la plupart des cas, protégés contre la rupture par torsion jusqu'à environ la première moitié de leur partie active. Cette protection peut encore être moindre dans les cas d'instruments à conicité progressive.

Pour que la méthode d'alésage rotatif à entraînement mécanisé devienne une solution universellement utilisée par les généralistes et non seulement par les spécialistes en endodontie, il est nécessaire que « la casse instrumentale » due aux causes énumérées précédemment soit encore réduite. A cet effet, il est indispensable que les conditions suivantes soient remplies :
- le couple de travail doit correspondre au couple de casse au niveau de la pointe de l'instrument,
- le risque de vissage doit être réduit à néant,
- le risque de gainage doit être nul,
- la gestion de la fatigue du matériau utilisé pour l'instrument doit être assurée,
- l'utilisation de l'instrument doit s'inscrire dans une séquence standard,
- le guidage de la pointe de l'instrument doit être garanti.

### Exposé de l'invention

La présente invention se propose de pallier l'ensemble des inconvénients mentionnés ci-dessus et de fournir les moyens permettant de remplir les conditions énoncées pour que la méthode d'alésage rotatif à entraînement mécanisé puisse devenir une solution universelle fiable permettant à la fois d'améliorer la qualité du travail effectué par le praticien, de supprimer les risques pour le patient et ceci à des conditions économiques avantageuses.

Ce but est atteint par l'instrument selon l'invention tel que défini en préambule et caractérisé en ce que l'enveloppe des zones proximale, centrale et distale présente une forme générale de cône inversé, la partie de plus grande section correspondant à la zone distale et la partie de plus petite section correspondant à la zone proximale.

Selon un premier mode de réalisation, ladite enveloppe présente une forme de tronc de cône et comporte un angle au sommet identique sur toute sa longueur.

Selon un deuxième mode de réalisation, ladite enveloppe est constituée de plusieurs tronçons juxtaposés dans le prolongement axial l'un de l'autre, ces tronçons ayant chacun la forme d'un tronc de cône et chacun de ces troncs de cônes comportant un angle au sommet différent, l'angle au sommet le plus grand correspondant à la zone distale, l'angle au sommet le plus petit correspondant à la zone proximale et les angles au sommet intermédiaires correspondant à la zone centrale.

Selon un troisième mode de réalisation, l'angle de l'enveloppe par rapport à l'axe de l'instrument est progressivement et régulièrement décroissant de la zone distale vers la zone proximale.

De façon préférentielle, l'instrument comporte une zone de jonction entre ladite zone proximale et ledit tronçon d'extrémité, cette zone de jonction comportant une amorce de rupture calibrée pour qu'elle se brise lorsqu'un couple d'entraînement prédéterminé est appliqué.

Selon une première construction, ladite amorce de rupture est constituée par un segment ayant une section réduite.

Selon une deuxième construction, ladite amorce de rupture est constituée par une modification de la nature et/ou de la structure du matériau de l'instrument.

Selon une troisième construction, ladite amorce de rupture est constituée par au moins une entaille périphérique ménagée dans ladite zone de jonction.
De façon préférentielle, ledit couple d'entraînement prédéterminé correspond au couple de rupture de la zone distale de l'instrument.

Afin de favoriser le guidage de l'instrument, ladite zone distale comporte avantageusement une pointe arrondie.

Selon une forme de construction particulièrement avantageuse, ladite zone centrale a une section polygonale et comporte des goujures à arêtes de coupe vives de forme sensiblement hélicoïdale.

Selon une variante, ladite zone centrale active peut présenter une section polygonale et comporte des goujures à arêtes de coupe émoussées de forme sensiblement hélicoïdale.

De façon très avantageuse, ladite zone centrale comporte des tronçons de dégagement et des tronçons de travail, les tronçons de dégagement ayant une section inférieure à celle des tronçons de travail.

Selon une autre variante de réalisation, ladite zone centrale comporte des tronçons en hélice et des tronçons rectilignes.

### Description sommaire des dessins

La présente invention et ses principaux avantages apparaîtront mieux dans la description de différents modes de réalisation, en référence aux dessins annexés, dans lesquels:
la figure 1 représente une vue d'une première forme de réalisation de l'instrument selon l'invention,
la figure 2 représente une vue d'une deuxième forme de réalisation de l'instrument selon l'invention,
la figure 3 représente une vue d'une troisième forme de réalisation de l'instrument selon l'invention,
la figure 4 représente une vue d'une quatrième forme de réalisation de l'instrument selon l'invention,
la figure 5 représente une vue schématique illustrant un mode de réalisation particulier de l'instrument selon l'invention, et
la figure 6 représente une vue schématique illustrant un autre mode de réalisation particulier de l'instrument selon l'invention.

### Manière(s) de réaliser l'invention

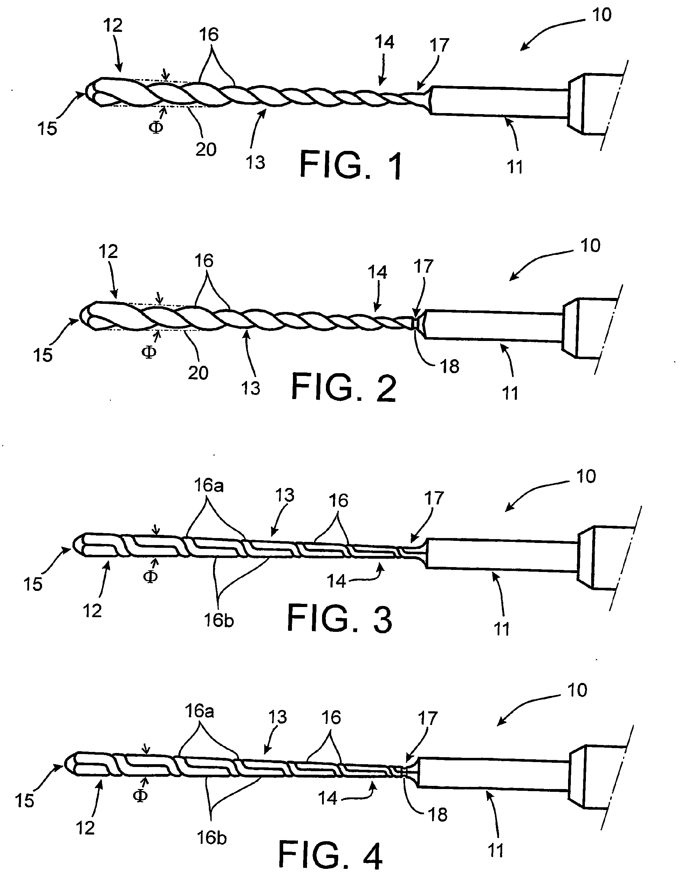

En référence aux figures, l'instrument 10 représenté comporte, dans toutes ses variantes de réalisation, un tronçon d'extrémité 11 agencé pour être monté dans un mandrin entraîné par un moteur électrique (non représenté), une zone distale 12, une zone centrale 13 et une zone proximale 14. La zone distale qui se trouve à l'opposé du tronçon d'extrémité 11 est agencée pour assurer le guidage de l'instrument dans un canal radiculaire. Cette zone se termine par une extrémité arrondie 15, ce qui permet d'assurer un guidage efficace et sûr en évitant que l'instrument ne se plante dans les parois du canal et que sa progression ne soit bloquée. Dans les exemples illustrés par les figures 1 et 2, la zone centrale 13 a une section polygonale et comporte des goujures 16 à arêtes de coupe vives de forme sensiblement hélicoïdale. Dans les exemples représentés par les figures 3 et 4, la zone centrale 13 a une section polygonale et comporte des goujures 16 pourvues de parties hélicoïdales 16a qui alternent avec des parties rectilignes 16b. Cette alternance permet de réduire la tendance au vissage de l'instrument. Les goujures peuvent être coupantes ou émoussées selon les utilisations. Ces deux formes de réalisation peuvent être utilisées selon la nature des travaux à effectuer ou selon les habitudes de travail du personnel soignant.

Dans les exemples illustrés par les figures 1 à 4, l'enveloppe 20 des zones distale 12, centrale 13 et proximale 14 présente une forme générale de cône inversé, la partie de plus grande section correspondant à la zone distale 12 et la partie de plus petite section correspondant à la zone proximale 14. Pour tous ces exemples, cette enveloppe présente une forme de tronc de cône et comporte un angle au sommet Φ identique sur toute sa longueur.

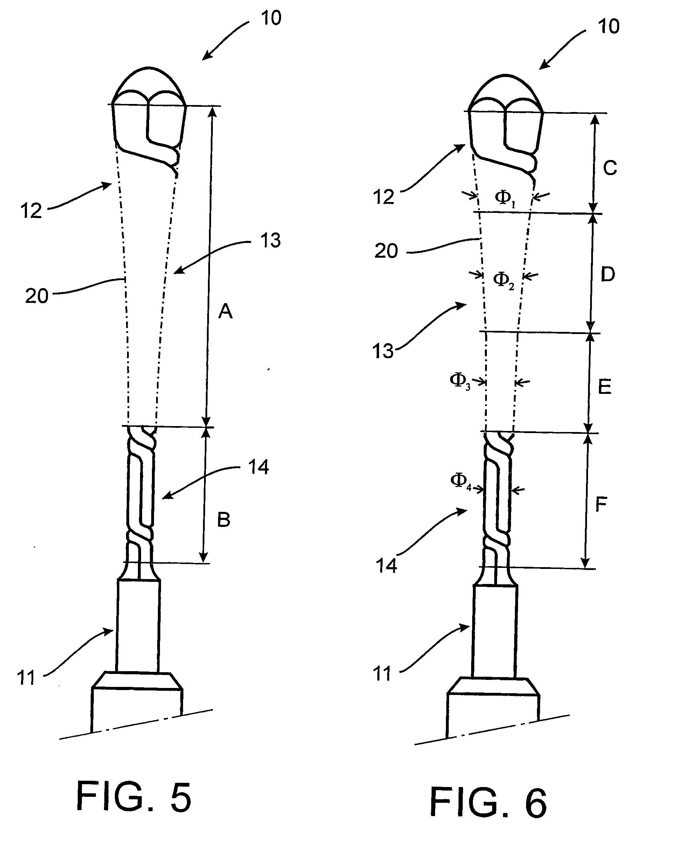

Dans l'exemple de réalisation illustré par la figure 5, l'angle de l'enveloppe 20 par rapport à l'axe de l'instrument 10 est progressivement et régulièrement décroissant de la zone distale 12 vers la zone proximale 14. L'instrument 10 comporte un tronçon A qui regroupe la zone distale 12 et la zone centrale 13 et un tronçon B qui correspond sensiblement à la zone proximale attachée au tronçon d'extrémité 11. D'après une variante envisageable, la partie de l'enveloppe 20 correspondant au tronçon B peut avoir une section constante, c'est-à-dire présenter une forme cylindrique. Toutefois, d'après la variante de réalisation la plus courante, la variation régulière de l'angle au centre s'étend sur toute la longueur de l'enveloppe. En d'autres termes, le cône inversé a un angle au sommet progressivement croissant de la zone proximale à la zone distale.

Dans l'exemple de réalisation illustré par la figure 6, l'enveloppe est constituée de plusieurs tronçons C, D, E et F juxtaposés dans le prolongement axial l'un de l'autre, ces tronçons ayant chacun sensiblement la forme d'un tronc de cône et chacun de ces troncs de cônes ayant un angle au sommet Φ₁, Φ₂, Φ₃ et Φ₄ différent, l'angle au sommet le plus grand Φ₁ correspondant à la zone distale 12, l'angle au sommet le plus petit Φ₄ correspondant à la zone proximale 14 et les angles au sommet intermédiaires Φ₂ et Φ₃ correspondant à la zone centrale 13.

Dans tous les exemples représentés, l'instrument 10 comporte une zone de jonction 17 entre ladite zone proximale 14 et ledit tronçon d'extrémité 11, cette zone de jonction 17 comportant une amorce de rupture calibrée pour qu'elle se brise lorsqu'un couple d'entraînement prédéterminé est appliqué.

Dans les formes de réalisation représentées par les figures 1 et 3 par exemple, ladite amorce de rupture est constituée par une section réduite au niveau de la zone de jonction 17. Cette section réduite s'obtient par exemple grâce à un usinage approprié au moment de la taille du profil de l'instrument et en particulier des goujures 16 à arêtes de coupe de l'instrument dans la zone centrale 13.

Dans les formes de réalisation représentées par les figures 2 et 4, ladite amorce de rupture dans la zone de jonction 17 s'obtient par exemple par un usinage d'au moins une entaille périphérique 18 réalisée de préférence au moment de la taille du profil de l'instrument et en particulier des goujures 16 à arêtes de coupe de l'instrument.

L'amorce de rupture dans la zone de jonction 17 pourrait également être réalisée par une modification de la structure ou de la nature du matériau utilisé pour réaliser l'instrument.

L'avantage d toutes ces formes de réalisation, quel que soit le profil des zones distale, centrale et proximale est que si le couple de consigne donné au contre-angle est dépassé l'instrument casse tout à la fin de la partie active, à un endroit accessible au praticien, ce qui lui permet de retirer l'instrument du canal sans aucun problème. Même si la cassure est due à une mauvaise utilisation, il est toujours possible au praticien de récupérer l'instrument sans dommage irréversible.

La valeur de l'angle du cône inversé dont les variantes de formes ont été décrites ci-dessus, peut être différente selon les instruments. Il est envisageable de réaliser des gammes d'instruments ayant des angles plus ou moins ouverts. Les instruments illustrés par les figures 1 et 2 en particulier ont une forme de goujures prévue pour pousser les copeaux vers l'extérieur de l'orifice et qui, en outre, est adaptée pour annuler tout effet de vissage et de gainage. Le principe de cône inversé peut être avantageusement appliqué aux instruments d'alésage radiculaires quel qu'en soit le type. Le nombre de goujures, la forme de celles-ci, les angles de coupe peuvent être quelconques. Le principe est particulièrement adapté à l'usage d'entraînements motorisés utilisant un contre-angle.

On notera que le canal radiculaire doit être conique en fin de préparation en prévision de son obturation. L'instrument à cône inversé décrit ci-dessus est destiné à être utilisé uniquement à un moment défini dans la séquence de préparation, en particulier pour le premier passage afin de sécuriser le passage des instruments coniques. II s'inscrit dans une gamme d'instruments de traitement en complément des autres instruments et permet un travail de préparation permettant de supprimer les risques de vissage et de rupture.

## Revendications

1. Instrument pour l'alésage de canaux radiculaires, notamment un instrument d'alésage flexible destiné à être entraîné mécaniquement par un moteur électrique, cet instrument (10) comportant un tronçon d'extrémité (11) agencé pour être monté dans un mandrin entraîné par ledit moteur électrique, une zone proximale (14) adjacente audit tronçon d'extrémité (11), une zone centrale (13) prolongeant la zone proximale et une zone distale (12) prolongeant la zone centrale (13) et agencée pour assurer le guidage de l'instrument dans un canal radiculaire, **caractérisé en ce que** l'enveloppe (20) des zones proximale, centrale et distale présente une forme générale de cône inversé, la partie de plus grande section correspondant à la zone distale (12) et la partie de plus petite section correspondant à la zone proximale (14).

2. Instrument selon la revendication 1, **caractérisé en ce que** ladite enveloppe (20) présente une forme de tronc de cône et comporte un angle au sommet (Φ) identique sur toute sa longueur.

3. Instrument selon la revendication 1, **caractérisé en ce que** ladite enveloppe (20) est constituée de plusieurs tronçons (C, D, E, F) juxtaposés dans le prolongement axial l'un de l'autre, ces tronçons ayant chacun la forme d'un tronc de cône et chacun de ces troncs de cônes comportant un angle au sommet (Φ₁, Φ₂, Φ₃, Φ₄) différent, l'angle au sommet le plus grand (Φ₁) correspondant à la zone distale (12), l'angle au sommet le plus petit (Φ₄) correspondant à la zone proximale (14) et les angles au sommet intermédiaires (Φ₂, Φ₃) correspondant à la zone centrale (13).

4. Instrument selon la revendication 1, **caractérisé en ce que** l'angle de l'enveloppe (20) par rapport à l'axe de l'instrument est progressivement et régulièrement décroissant de la zone distale (12) vers la zone proximale (14).

5. Instrument selon la revendication 1, **caractérisé en ce qu'**il comporte une zone de jonction (17) entre ladite zone proximale (14) et ledit tronçon d'extrémité (11), cette zone de jonction comportant une amorce de rupture calibrée pour qu'elle se brise lorsqu'un couple d'entraînement prédéterminé est appliqué.

6. Instrument selon la revendication 5, **caractérisé en ce que** ladite amorce de rupture est constituée par un segment ayant une section réduite.

7. Instrument selon la revendication 5, **caractérisé en ce que** ladite amorce de rupture est constituée par une modification de la nature et/ou de la structure du matériau de l'instrument.

8. Instrument selon la revendication 5, **caractérisé en ce que** ladite amorce de rupture est constituée par au moins une entaille périphérique (18) ménagée dans ladite zone de jonction (17).

9. Instrument selon la revendication 5, **caractérisé en ce que** ledit couple d'entraînement prédéterminé correspond au couple de rupture de la zone distale de l'instrument.

10. Instrument selon la revendication 1, **caractérisé en ce que** ladite zone distale (12) comporte une pointe arrondie (15).

11. Instrument selon la revendication 1, **caractérisé en ce que** ladite zone centrale (13) a une section polygonale et comporte des goujures (16) à arêtes de coupe vives de forme sensiblement hélicoïdale.

12. Instrument selon la revendication 1, **caractérisé en ce que** ladite zone centrale (13) a une section polygonale et comporte des goujures (16) à arêtes de coupe émoussées de forme sensiblement hélicoïdale.

13. Instrument selon la revendication 8, **caractérisé en ce que** ladite zone centrale (13) comporte des tronçons de dégagement et des tronçons de travail, les tronçons de dégagement ayant une section inférieure à celle des tronçons de travail.

14. Instrument selon la revendication 1, **caractérisé en ce que** ladite zone centrale (13) comporte des tronçons en hélice (16a) et des tronçons rectilignes (16b).

## Claims

1. An instrument for drilling root canals, in particular a flexible drilling instrument designed to be mechanically driven by an electric motor, this instrument (10) comprising an end section (11) arranged to be mounted in a chuck driven by said electric motor, a proximal region (14) adjacent to said end section (11), a central region (13) extending from said proximal region, and a distal region (12) extending from the central region (13) and arranged for guiding the instrument through the root canal, **characterized in that** the envelope (20) of the proximal, central and distal regions has a generally inverted cone shape, with the widest portion corresponding to the distal region (12) and the smallest portion corresponding to the proximal region (14).

2. An instrument according to claim 1, **characterized in that** said envelope (20) has a truncated cone shape and comprises a vortex angle (Φ) that is identical along its entire length.

3. An instrument according to claim 1, **characterized in that** said envelope (20) consists of several juxtaposed sections (C, D, E, F) extending axially from one another, each of these sections having a truncated cone shape and each of these truncated cones comprising a different vortex angle (Φ₁, Φ₂, Φ₃, Φ₄), with the widest vortex angle (Φ₁) corresponding to the distal region (12), the smallest vortex angle (Φ₄) corresponding to the proximal region (14), and the intermediate vortex angles (Φ₂, Φ₃) corresponding to the central region (13).

4. An instrument according to claim 1, **characterized in that** the angle of the envelope (20) relative to the axis of the instruments decreases progressively and regularly from the distal region (12) to the proximal region (14).

5. An instrument according to claim 1, **characterized in that** it comprises a junction region (17) between said proximal region (14) and said end section (11), this junction region comprising a partial break calibrated to split apart when a predetermined drive torque is applied.

6. An instrument according to claim 5, **characterized in** said partial break consists of a portion of reduced section.

7. An instrument according to claim 5, **characterized in that** said partial break consists of a modification in the type and/or the structure of material used for the instrument.

8. An instrument according to claim 5, **characterized in that** said partial break consists of at least one peripheral notch (18) formed in said junction region (17).

9. An instrument according to claim 5, **characterized in that** said predetermined drive torque corresponds to the torque at which the distal region of the instrument breaks.

10. An instrument according to claim 1, **characterized in that** said distal region (12) comprises a rounded tip (15).

11. An instrument according to claim 1, **characterized in that** said central region (13) is of a polygonal section and comprises hollowed flutes (16) with sharp cutting edges of a substantially helical form.

12. An instrument according to claim 1, **characterized in that** said central region (13) is of a polygonal section and comprises flutes (16) with blunt edges of a substantially helical form.

13. An instrument according to claim 8, **characterized in that** said central region (13) comprises non-working sections and working sections, the non-working sections being smaller in section than the working sections.

14. An instrument according to claim 1, **characterized in that** said central region (13) comprises helical sections (16a) and rectilinear sections (16b).

## Patentansprüche

1. Instrument zum Bohren von Wurzelkanälen, insbesondere ein flexibles Bohrinstrument, welches dazu bestimmt ist, durch einen Elektromotor mechanisch angetrieben zu werden, wobei das Instrument (10) ein äußerstes Endteilstück (11), welches angeordnet ist, um in einem durch den Elektromotor angetriebenen Dorn angebracht zu werden und eine an das äußerste Endteilstück (11) angrenzende Proximalzone (14) aufweist, wobei eine Zentralzone (13) die Proximalzone verlängert und eine Distalzone (12) die Zentralzone (13) verlängert und angeordnet ist, um die Führung des Instrumentes in einem Wurzelkanal sicherzustellen, **dadurch gekennzeichnet, dass** die Hülle (20) der Proximal-, Zentral- und Distalzone eine allgemeine Form eines umgekehrten Kegels aufweist, wobei der Teil mit dem größten Querschnitt der Distalzone (12) und der Teil mit dem kleinsten Querschnitt der Proximalzone (14) entspricht.

2. Instrument nach Anspruch 1,
**dadurch gekennzeichnet, dass**
die Hülle (20) eine Kegelstumpfform aufweist, und einen Winkel zu der Spitze (Φ) aufweist, der über ihre gesamte Länge identisch ist.

3. Instrument nach Anspruch 1,
**dadurch gekennzeichnet, dass**
die Hülle (20) aus mehreren Teilstücken (C,D,E,F) besteht, die in der Axialverlängerung nebeneinander positioniert sind, wobei die Teilstücke jeweils eine Kegelstumpfform aufweisen und jeder der Kegelstümpfe einen unterschiedlichen Winkel zu der Spitze (Φ₁, Φ₂, Φ₃, Φ₄) aufweist, wobei der größte Winkel (Φ₁) zu der Spitze der Distalzone (12) entspricht, der kleinste Winkel (Φ₄) zu der Spitze der Proximalzone (14) entspricht und die Zwischenwinkel (Φ₂,Φ₃) der Zentralzone (13) entsprechen.

4. Instrument nach Anspruch 1,
**dadurch gekennzeichnet, dass**
der Winkel der Hülle (20) im Verhältnis zu der Achse des Instrumentes fortschreitend und regelmäßig von der Distalzone (12) in Richtung der Proximalzone (14) abnimmt.

5. Instrument nach Anspruch 1,
**dadurch gekennzeichnet, dass**
es eine Verbindungszone (17) zwischen der Proximalzone (14) und dem äußersten Endteilstück (11) aufweist, wobei die Verbindungszone einen kalibrierten Anriss aufweist, damit sie dann reißt, wenn ein zuvor festgelegtes Antriebsmoment aufgebracht wird.

6. Instrument nach Anspruch 5,
**dadurch gekennzeichnet, dass**
der kalibrierte Anriss aus einem Segment mit einem verringerten Querschnitt besteht.

7. Instrument nach Anspruch 5,
**dadurch gekennzeichnet, dass**
der kalibrierte Anriss in Form einer Veränderung der Art und/oder der Struktur des Werkstoffes des Instrumentes besteht.

8. Instrument nach Anspruch 5,
**dadurch gekennzeichnet, dass**
der Anriss aus mindestens einer Umfangseinkerbung (18) besteht, die in die Verbindungszone (17) eingearbeitet ist.

9. Instrument nach Anspruch 5,
**dadurch gekennzeichnet, dass**
das zuvor festgelegte Antriebsmoment dem Bruchmoment der Distalzone des Instrumentes entspricht.

10. Instrument nach Anspruch 1,
**dadurch gekennzeichnet, dass** die Distalzone (12) eine abgerundete Spitze (15) aufweist.

11. Instrument nach Anspruch 1,
**dadurch gekennzeichnet, dass** die Zentralzone (13) einen mehreckigen Querschnitt, und X-Nuten (16) mit scharfen Schnittkanten in praktisch spiralförmiger Form aufweist.

12. Instrument nach Anspruch 1,
**dadurch gekennzeichnet, dass**
die Zentralzone (13) einen mehreckigen Querschnitt, und X-Nuten (16) mit abgestumpften Schnittkanten in praktisch spiralförmiger Form aufweist.

13. Instrument nach Anspruch 8,
**dadurch gekennzeichnet, dass** die Zentralzone (13) Ausrastteilstücke und Arbeitsteilstücke aufweist, wobei die Ausrastteilstücke einen Querschnitt aufweisen, der kleiner als derjenige der Arbeitsteilstücke ist.

14. Instrument nach Anspruch 1,
**dadurch gekennzeichnet , dass**
die Zentralzone (13) schneckenförmige Teilstücke (16a) und gerade Teilstücke (16b) aufweist.
